# EUROPÄISCHE PATENTSCHRIFT

(11) **EP 3 557 125 B1**
(45) Veröffentlichungstag und Bekanntmachung des Hinweises auf die Patenterteilung: **20.05.2020**
(21) Anmeldenummer: 19168836.5
(22) Anmeldetag: 12.04.2019
(51) Int. Cl.: F21V 5/00, F21V 7/00, G02B 3/00, G02B 19/00, F21V 7/09, F21V 14/06

(54) **LINSENANORDNUNG ZUM RICHTEN DES VON EINEM LEUCHTMITTEL EMITTIERTEN LICHTS**
LENS ASSEMBLY FOR ALIGNING THE LIGHT EMITTED BY A LIGHT SOURCE
AGENCEMENT DE LENTILLES PERMETTANT DE DIRIGER LA LUMIÈRE ÉMISE PAR UN MOYEN D'ÉCLAIRAGE

(30) Priorität: 20.04.2018 DE 202018102205 U
(43) Veröffentlichungstag der Anmeldung: 23.10.2019
(73) Patentinhaber: Zumtobel Lighting GmbH, 6850 Dornbirn (AT)
(72) Erfinder: Escourrou, Thibaut, 6850 Dornbirn (AT)
(74) Vertreter: Kiwit, Benedikt

(56) Entgegenhaltungen:
- US-A1- 2005 243 570
- US-A1- 2011 122 615

## Beschreibung

Die Erfindung betrifft eine Linsenanordnung zum Richten des von einem Leuchtmittel emittierten Lichts, ein Linsenarray aufweisend dieselbe sowie eine Leuchte aufweisend eine solche Linsenanordnung oder Linsenarray. Linsenanordnungen zum Richten, insbesondere Fokussieren von Licht sind aus dem Stand der Technik bekannt. Diese Linsenanordnungen erfordern jedoch häufig unterschiedliche Teile bzw. Linsen, sodass diese bezüglich ihres Herstellungsaufwandes nachteilhaft sind. Ferner besteht das Bedürfnis, die Lichtabgabe dieser Linsenanordnungen zu verbessern, d.h. insbesondere das Richten bzw. Fokussieren des Lichts durch die Linsenanordnung zu verbessern.

US 2005 / 0 243 570 A1 zeigt unter anderem einen optischen Verteiler, der im Wesentlichen zwei identische zylindrische Optiken aufweist. Die beiden Optiken sind rotationssymmetrisch ausgebildet und liegen gegensätzlich ausgerichtet aufeinander auf.

US 2011 / 0 122 615 A1 zeigt unter anderem eine zylindrische Linse, die der Fokussierung des von mehreren Lichtquellen emittierten Lichtes dient. Dazu wird das von den Lichtquellen emittierte Licht zum Teil an mehreren zylindrischen Flächen reflektiert und so schließlich fokussiert.

Im Stand der Technik ist außerdem die Anwendung von Linsen zur totalen internen Reflexion von Licht, so genannte TIR (total internal reflection) Linsen, bekannt. Diese Linsen bringen einige Vorteile mit sich, wie beispielsweise die vorteilhafte, insbesondere gerichtete Auskopplung des in diese Linsen eingekoppelten Lichts.

Der Erfindung liegt somit die Aufgabe zugrunde, eine Linsenanordnung zu schaffen, welche die oben genannten Nachteile des Standes der Technik überwindet. Das heißt, die Aufgabe besteht insbesondere darin eine Linsenanordnung zu schaffen, welche bezüglich ihres Herstellungsaufwandes verbessert ist, also insbesondere einfacher und effizienter herstellbar ist, und gleichzeitig eine vorteilhafte Lichtabgabe bzw. ein vorteilhaftes Richten von Licht bewirkt, also insbesondere Licht definiert fokussiert.

Die Aufgabe wird erfindungsgemäß für die Linsenanordnung, das Linsenarray und die Leuchte durch die Merkmale der unabhängigen Ansprüche gelöst. Vorteilhafte Weiterbildungen sind Gegenstand der hierauf rückbezogenen Unteransprüche.

Eine erfindungsgemäße Linsenanordnung zum Richten des von einem Leuchtmittel emittierten Lichts weist eine erste und eine zweite Linse zur totalen internen Reflexion von Licht (TIR-Linse) auf. Die Linsen weisen dabei jeweils auf: einen Einkoppelbereich zum Einkoppeln von Licht in die Linse, erste und zweite Reflexionsflächen zur internen Reflexion wenigstens eines Teils des über den Einkoppelbereich eingekoppelten Lichts, wobei sich die ersten Reflexionsflächen von den zweiten Reflexionsflächen unterscheiden, und einen Auskoppelbereich zum Auskoppeln des in die Linse über den Einkoppelbereich eingekoppelten Lichts. Die Linsen sind derart angeordnet, dass sich ihre Auskoppelbereiche gegenüberliegen. Ferner sind die Linsen derart relativ zueinander bezüglich einer Hauptabstrahlrichtung verdreht angeordnet, dass Licht, welches über den Einkoppelbereich der ersten Linsen in diese eingekoppelt wird und aus der ersten Linse über ihren Auskoppelbereich ausgekoppelt wird, in die zweite Linse über deren Auskoppelbereich eingekoppelt und wenigstens teilweise aus deren Einkoppelbereich und wenigstens einer der ersten und zweiten Reflexionsfläche der zweiten Linse gerichtet ausgekoppelt wird.

Erfindungsgemäß wird unter der Hauptabstrahlrichtung eine Achse, insbesondere die Symmetrieachse, des von der Linsenanordnung abgegebenen Lichtbündels verstanden.

Mit anderen Worten wird erfindungsgemäß eine Linsenanordnung bereitgestellt, welche Licht gerichtet abgeben kann, indem nur zwei Linsen mit jeweils zwei unterschiedlichen Profilen, nämlich die ersten und zweiten Reflexionsflächen, zur totalen internen Reflexion von Licht relativ zueinander verdreht angeordnet werden. Da die jeweilige Linse zwei unterschiedliche Reflexionsflächen aufweist, also eine insofern asymmetrische Form, als sie nicht rotationssymmetrisch ist, kann durch Verdrehung der Linsen relativ zueinander die Ausrichtung der ersten und zweiten Reflexionsflächen der ersten Linse relativ zu den ersten bzw. zweiten Reflexionsflächen der zweiten Linse ausgerichtet werden. Somit kann bewirkt werden, dass vorzugsweise nur die ersten Reflexionsflächen und der Einkoppelbereich der zweiten Linse das von der ersten Linse ausgekoppelte Licht richten, insbesondere (bezüglich aller Richtungen der beleuchteten Fläche) fokussieren oder bündeln. Dadurch können auch der Ein- und Auskoppelbereich und die Reflexionsflächen der ersten Linse identisch zu dem Ein- und Auskoppelbereich und den Reflexionsflächen der zweiten Linse ausgebildet sein. Somit wird insbesondere der Herstellungsaufwand der Linsenanordnung reduziert, da wenigstens hinsichtlich des Ein- und Auskoppelbereichs sowie der Reflexionsflächen nur eine Art von Linsen bereitgestellt werden muss. Indem also einfach eine der Linsen auf den Kopf gestellt wird und die Linsen relativ zueinander verdreht angeordnet sind, wird dann Licht durch die Linsenanordnung bzw. insbesondere den Einkoppelbereich und wenigstens der ersten Reflexionsfläche aus der Linsenanordnung gerichtet ausgekoppelt.

Vorteilhafterweise ist die Linsenanordnung eingerichtet, über den Einkoppelbereich der ersten Linse eingekoppeltes Licht derart gerichtet aus der zweiten Linse auszukoppeln, dass es fokussiert wird. Somit können die vorgenannten Vorteile zur einfachen Fokussierung bzw. Bündelung von Licht verwendet werden.

Die Linsen können bezüglich der Hauptabstrahlrichtung um 90° relativ zueinander verdreht angeordnet sein. Hierdurch verringert sich weiter der Herstellungsaufwand, da bereits durch einfaches Drehen von - wie oben beschrieben - gleich ausgebildeten Linsen um 90° bezüglich der Hauptabstrahlrichtung die gewünschte Auskopplung des Lichts bewirkt wird.

Um noch weiter den Herstellungsaufwand der Linsenanordnung zu reduzieren und um die Linsenanordnung insgesamt noch kompakter auszuführen, können die Linsen derart angeordnet sein, dass ihre optischen Achsen fluchten. Unter einer optischen Achse wird hierbei insbesondere eine Achse, insbesondere Symmetrieachse, der jeweiligen Linse und/oder der Lichtabgabe der jeweiligen Linse verstanden. Im fluchtenden Zustand der optischen Achsen bildet also die Hauptabstrahlrichtung der Linsenanordnung die optischen Achsen bzw. fluchtet mit diesen.

Die Linsen können ferner derart relativ zueinander verdreht angeordnet sein, dass ein Teil des von der ersten Linsen ausgekoppelten Lichts teilweise auf die ersten Reflexionsflächen der zweiten Linse trifft, um über diese gerichtet ausgekoppelt zu werden. Somit kann auf vorteilhafte Art und Weise Licht gerichtet werden, indem die eigentlich zur Reflexion vorgesehenen ersten Reflexionsflächen der zweiten Linse zur Brechung/Refraktion des auf diese Reflexionsflächen treffenden Lichts benutzt werden. Das heißt, aufgrund der verdrehten Anordnung der Linsen relativ zueinander fällt das von der ersten Linse ausgekoppelte Licht in so einem Winkel auf die ersten Reflexionsflächen der zweiten Linse, dass es an diesen nicht reflektiert, sondern gebrochen und somit gerichtet aus der Linsenanordnung ausgekoppelt wird.

Die Linsen können derart relativ zueinander verdreht angeordnet sein, dass wenigstens das an den zweiten Reflexionsflächen der ersten Linse reflektierte Licht auf den Einkoppelbereich der zweiten Linse trifft, um an diesen gerichtet ausgekoppelt zu werden. Das heißt, durch die Verdrehung der Linsen relativ zueinander fällt das an den zweiten Reflexionsflächen der ersten Linse reflektierte Licht in so einem Winkel auf den Einkoppelbereich der zweiten Linse, dass das Licht an diesem gebrochen wird und somit an diesem gerichtet aus der Linsenanordnung ausgekoppelt wird. Somit wird durch einfache Ausrichtung der zweiten Reflexionsflächen der ersten Linse relativ zu dem Einkoppelbereich der zweiten Linse eine gerichtete Lichtabgabe bewirkt.

In Draufsicht der zweiten Linse und entgegen der Hauptabstrahlrichtung gesehen kann der Einkoppelbereich der zweiten Linse eine konvexe Form aufweisen. Mit anderen Worten kann die konkave Seite dieser Form in Richtung der ersten Linse zeigen. Die Linsen sind dann derart relativ zueinander verdreht angeordnet, dass das an den zweiten Reflexionsflächen der ersten Linse reflektierte Licht auf diese konvexe Form trifft, um über diese gerichtet ausgekoppelt zu werden. Die konvexe Form in dem Einkoppelbereich bzw. der durch die konvexe Form bewirkte Einfallwinkel des Lichts auf diese eignet sich dabei in besonders vorteilhafter Weise das Licht zu richten. Somit wird eine sehr vorteilhafte gerichtete Lichtauskopplung an dieser konvexen Form bewirkt.

In Draufsicht der ersten Linse und in Hauptabstrahlrichtung gesehen kann der Einkoppelbereich der ersten Linse eine konvexe Form aufweisen, um auf diese konvexe Form treffendes Licht, d.h. insbesondere das von einem Leuchtmittel emittierte Licht, in die erste Linse einzukoppeln. Mit anderen Worten kann die konkave Seite dieser Form in Richtung der zweiten Linse zeigen. Die Linsen sind dann derart relativ zueinander verdreht angeordnet, dass dieses Licht von der ersten Linse ausgekoppelt wird und wenigstens teilweise auf die ersten Reflexionsflächen und/oder den Einkoppelbereich der zweiten Linse trifft, um über diese gerichtet ausgekoppelt zu werden. Mit anderen Worten bewirkt die konvexe Form im Einkoppelbereich der ersten Linse eine Lichtlenkung derart, dass das auf diese konvexe Form treffende Licht so gebrochen wird, dass es wenigstens auf die ersten Reflexionsflächen und vorzugsweise auch auf den Einkoppelbereich der zweiten Linse trifft, d.h. Licht derart aufweitet, dass wenigstens ein Teil der ersten Reflexionsflächen und vorzugsweise der komplette Einkoppelbereich der zweiten Linse in diesem Bündel Licht vorgesehen ist.

Die jeweilige konvexe Form kann in Richtung der Erstreckung der jeweiligen ersten Reflexionsfläche gesehen einen ersten Radius und in Richtung der Erstreckung der jeweiligen zweiten Reflexionsfläche gesehen einen zweiten Radius haben, wobei der erste Radius bevorzugt kleiner ist als der zweite Radius. Mit anderen Worten hat die konvexe Form vorzugsweise die Form eines Ellipsoids aufweisend die zwei vorgenannten Radien. Der größere bzw. zweite Radius bricht dann Licht derart, dass dieses zumindest auf die ersten Reflexionsflächen der zweiten Linse trifft. Hierdurch kann die mittels der zweiten Linse bewirkte gerichtete Lichtabgabe noch weiter verbessert werden.

Die Linsen können ferner derart relativ zueinander verdreht angeordnet sein, dass Licht, welches an den ersten Reflexionsflächen der ersten Linsen reflektiert wird, in die zweite Linse über den Auskoppelbereich der zweiten Linse eingekoppelt wird und aus der zweiten Linse im Wesentlichen unverändert ausgekoppelt wird. Mit anderen Worten wird somit im Wesentlichen nur das in der ersten Linse an den zweiten Reflexionsflächen reflektierte Licht aus der zweiten Linse gerichtet ausgekoppelt. Durch diese mittels der zweiten Linse teils gerichtete und teils nicht gerichtete Auskopplung des in die zweite Linse eingekoppelten Lichts wird somit eine besonders vorteilhafte Lichtabgabe der Linsenanordnung bewirkt.

Vorteilhafterweise sind die Linsen derart relativ zueinander verdreht angeordnet, dass Licht, welches an den ersten Reflexionsflächen der ersten Linse reflektiert wird, aus der zweiten Linse wenigstens teilweise, vorzugsweise nur neben den zweiten Reflexionsflächen der zweiten Linse ausgekoppelt wird, um somit aus der zweiten Linse im Wesentlichen unverändert ausgekoppelt zu werden. Dies kann beispielsweise bewirkt werden, indem die zweiten Reflexionsflächen näher an der jeweiligen optischen Achse sind als die ersten Reflexionsflächen bzw. der Abstand zwischen den zweiten Reflexionsflächen kleiner ist als der Abstand zwischen den ersten Reflexionsflächen. Dadurch wird wiederum die Lichtabgabe der Linsenanordnung verbessert.

Vorzugsweise stehen die Auskoppelbereiche miteinander in Kontakt. Hierdurch wird Licht im Übergang vom Auskoppelbereich der ersten Linse in den Auskoppelbereich der zweiten Linse nahezu nicht gebrochen. Somit kann Licht mittels der Linsenanordnung gerichtet bzw. fokussiert werden, während die Linsenanordnung insbesondere hinsichtlich ihrer Bauhöhe optimiert ist. Alternativ können die Auskoppelbereiche auch voneinander beabstandet sein. Somit wird der Anwendungsbereich der Linsenanordnung erweitert, da das von der ersten Linse abgegebene Licht- insbesondere aufgrund Brechung Linse-Luft und größerem Abstand der Reflexionsflächen und Auskoppelbereiche der Linsen voneinander - mittels der zweiten Linse anders gerichtet wird. Die Linsenanordnung kann zudem eingerichtet sein, den Abstand zwischen den Auskoppelbereichen beispielsweise mittels eines Versetellmechanismus einzustellen. Mit anderen Worten können die Linsen in der Linsenanordnung also relativ zueinander bewegbar angeordnet sein. Somit kann ein Nutzer der Linsenanordnung das Licht gemäß seinem Wunsch richten bzw. abhängig vom Abstand richten, insbesondere fokussieren.

Vorzugsweise sind die ersten Reflexionsflächen in seitlicher Schnittansicht gesehen gerade ausgebildet. Durch eine solche gerade Ausbildung der ersten Reflexionsflächen werden Reflexionsflächen bereitgestellt, welche in besonders vorteilhafterweise Licht mittels der zweiten Linse richten bzw. brechen kann sowie Licht in der ersten Linse derart reflektiert oder gebrochen, dass es in der nachgeschalteten zweiten Linse im Wesentlichen nicht reflektiert wird.

Vorzugsweise sind die ersten Reflexionsflächen in seitlicher Schnittansicht gesehen symmetrisch bezüglich der Hauptabstrahlrichtung bzw. der jeweiligen optischen Achse ausgebildet.

Vorzugsweise sind die zweiten Reflexionsflächen in seitlicher Schnittansicht gesehen gebogen ausgebildet. Mit anderen Worten können die zweiten Reflexionflächen von außerhalb der jeweiligen Linse gesehen konvex ausgebildet sein. Dies ist insbesondere vorteilhaft für die Reflektion von Licht, um mittels der zweiten Reflexionsflächen der ersten Linse Licht in vorgenannter Weise in Richtung des Einkoppelbereichs der zweiten Linse zu lenken.

Vorzugsweise sind die zweiten Reflexionsflächen in seitlicher Schnittansicht gesehen symmetrisch bezüglich der Hauptabstrahlrichtung bzw. der jeweiligen optischen Achse ausgebildet.

In einer besonders bevorzugten Ausführungsform sind die Linsen identisch (ausgebildet). Hierdurch wird in besonderem Maße durch Verwendung von Gleichteilen der Herstellungsaufwand der Linsenanordnung reduziert.

Ferner betrifft die Erfindung ein Linsenarray aufweisend eine Vielzahl von nebeneinander angeordneten, oben beschriebenen Linsenanordnungen. Hierdurch kann die zuvor genannte vorteilhafte Lichtabgabe der erfindungsgemäßen Linsenanordnung für eine flächige Lichtabgabe durch das Linsenarray genutzt werden.

Ferner betrifft die Erfindung eine Leuchte aufweisend eine Linsenanordnung wie zuvor beschrieben oder ein zuvor genanntes Linsenarray, wobei ein Leuchtmittel für die jeweilige Linsenanordnung vorgesehen ist. Das Leuchtmittel ist vorzugsweise eine LED.

Nachfolgend wird die Erfindung anhand der Figuren der Zeichnungen, in denen vorteilhafte Ausführungsbeispiele der Erfindung dargestellt sind, beispielhaft beschrieben. In den Zeichnungen zeigen:
- Figur 1: ein Ausführungsbeispiel einer Linse für die erfindungsgemäße Linsenanordnung;
- Figur 2: eine perspektivische Ansicht der in Figur 1 gezeigten Linse;
- Figur 3: eine erste Schnittansicht der in Figur 1 gezeigten Linse mit Blick in Richtung der Erstreckung der ersten Reflexionsflächen bzw. in Breitenrichtung der Linse;
- Figur 4: eine zweite Schnittansicht der in Figur 1 gezeigten Linse mit Blick in Richtung der Erstreckung der zweiten Reflexionsflächen bzw. in Längsrichtung der Linse;
- Figur 5: Lichtstärkeverteilungskurven der in den Figuren 1 bis 4 gezeigten Linse;
- Figur 6: Verteilung der Beleuchtungsstärke der in den Figuren 1 bis 4 gezeigten Linse auf einer sichtbaren Fläche;
- Figur 7: eine perspektivische Ansicht eines Ausführungsbeispiels der erfindungsgemäßen Linsenanordnung;
- Figur 8: die in Figur 7 dargestellte Linsenanordnung mit schematischem Strahlengang des Lichts in einer ersten Schnittansicht mit Blick in Richtung der zweiten Reflexionsflächen der ersten Linse bzw. in Längsrichtung der ersten Linse;
- Figur 9: die in Figur 7 dargestellte Linsenanordnung mit schematischem Strahlengang des Lichts in einer zweiten Schnittansicht mit Blick in Richtung der ersten Reflexionsflächen der ersten Linse bzw. in Breitenrichtung der ersten Linse;
- Figur 10: Lichtstärkeverteilungskurven der in den Figuren 7 bis 9 dargestellten Linsenanordnung;
- Figur 11: Verteilung der Beleuchtungsstärke der in den Figuren 7 bis 9 dargestellten Linsenanordnung auf einer sichtbaren Fläche;
- Figur 12: eine Seitenansicht der in den Figuren 7 bis 9 dargestellten Linsenanordnung;
- Figur 13: ein weiteres Ausführungsbeispiel der erfindungsgemäßen Linsenanordnung;
- Figur 14: eine perspektivische Ansicht eines Ausführungsbeispiels des erfindungsgemäßen Linsenarrays bzw. der erfindungsgemäßen Leuchte;
- Figur 15: eine Seitenansicht des in Figur 14 dargestellten Linsenarrays bzw. der in Figur 14 dargestellten Leuchte;
- Figur 16: eine Detailansicht der Figur 15.

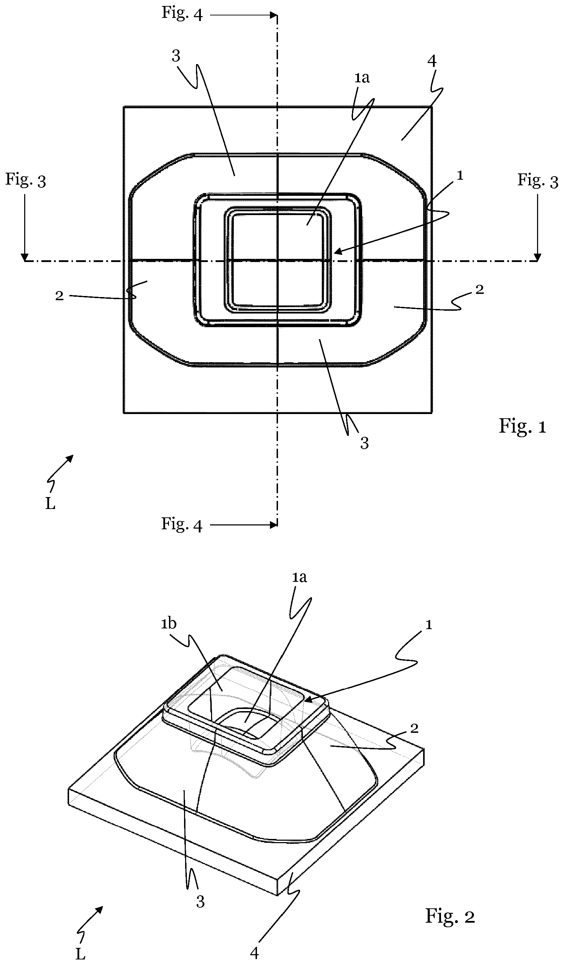

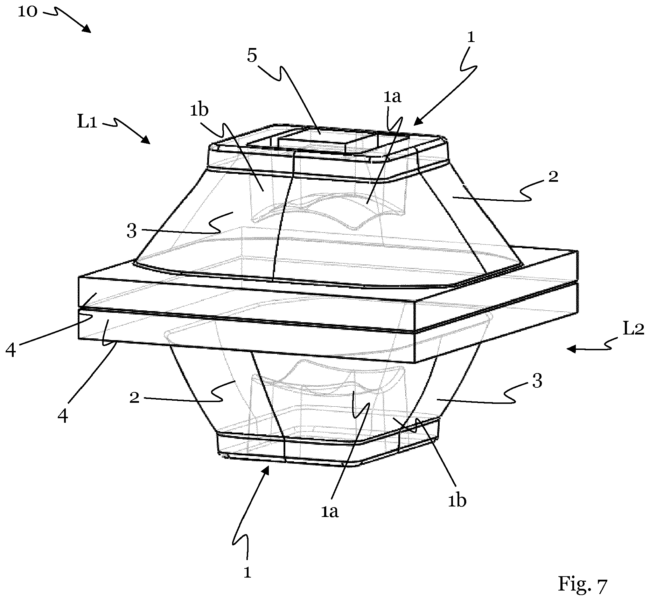

In den Figuren 1 bis 4 ist beispielhaft eine Linse L dargestellt, welche in zweifacher Ausführung als Linsen L1, L2 in einer erfindungsgemäßen Linsenanordnung 1, wie beispielhaft in den Figuren 7 bis 9 dargestellt, zur Anwendung kommt.

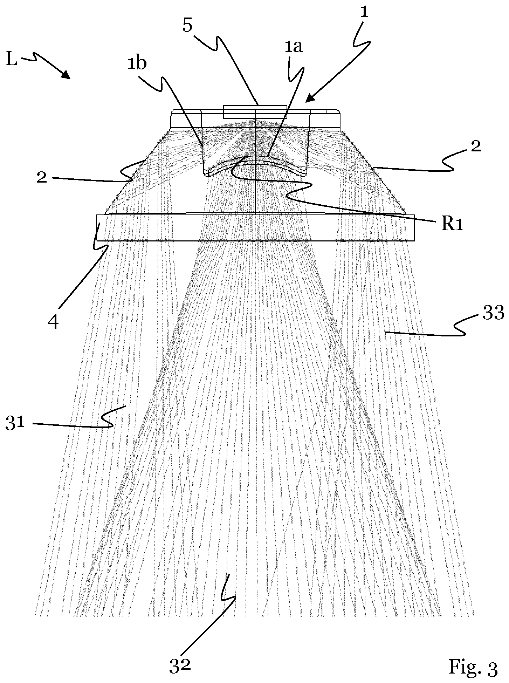

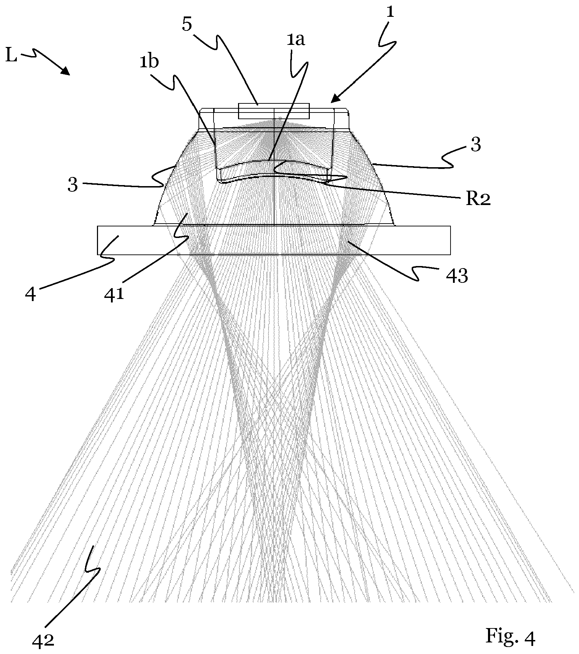

Die Linse L weist einen Einkoppelbereich 1 zum Einkoppeln von Licht in die Linse L auf. Wie in den Figuren dargestellt, ist der Einkoppelbereich 1 vorzugsweise in der Linse L derart ausgebildet, dass er eine in Draufsicht bzw. von außen erkennbare konvexe Form 1a erkennen lässt. Dies ist insbesondere in Figur 2 erkennbar. Bei Vergleich der Figuren 3 und 4 ist erkennbar, dass die konvexe Form zwei unterschiedliche Radien R1, R2 hat, nämlich derart, dass der in Figur 3 erkennbare Radius R1 kleiner ist als der in Figur 4 erkennbare Radius R2. In diesen Figuren ist ferner erkennbar, dass die unterschiedlichen Radien somit eine unterschiedliche Brechung des dort in die Linse L eingekoppelten Lichts bewirken, was schematisch mit den Strahlengängen 32 und 42 angedeutet ist. Genauer gesagt wird das Licht an dem in Figur 3 gezeigten kleineren Radius derart gebrochen, dass der Strahlengang 32 stärker gebündelt wird als der Strahlengang 42.

Wie insbesondere die Figuren 2 bis 4 erkennen lassen, kann der Einkoppelbereich 1 unter anderem als Sackloch 1b in der Linse L ausgebildet sein, sodass ein Teil des in die Linse L eingekoppelten Lichts über das Sacklock 1b in die Linse L eingekoppelt wird. Das heißt, der Einkoppelbereich 1 kann insbesondere als Sackloch 1b mit der konvexen Form 1a als Boden des Sacklochs 1b in der Linse L ausgebildet sein. In die Linse L eingekoppeltes Licht gelangt somit über den Bodenbereich des Sacklochs 1b bzw. die konvexe Form 1a und/oder das Sacklock 1b bzw. dessen Seitenwände in die Linse L.

Die Linse L weist ferner erste Reflexionsflächen 2 und zweite Reflexionsflächen 3 auf, welche vorzugsweise seitliche Flanken der Linse L sind. Die Reflexionsflächen 2, 3 sind zur internen Reflexion wenigstens eines Teils über den Einkoppelbereich 1 eingekoppelten Lichts vorgesehen. Die ersten Reflexionsflächen 2 unterscheiden sich dabei von den zweiten Reflexionsflächen 3, insbesondere derart, dass die ersten Reflexionsflächen 2 eine im Vergleich zu den zweiten Reflexionsflächen 3 parallelere Reflexion bzw. stärkere Bündelung von Licht bewirken. Die Reflexionsflächen 2, 3 können sich dabei insbesondere hinsichtlich ihres Querschnitts unterscheiden. Wie ferner Figur 3 erkennen lässt, können die ersten Reflexionsflächen 2 in Schnittansicht gesehen im Wesentlichen gerade und vorzugsweise symmetrisch ausgebildet sein. Die ersten Reflexionsflächen 2 bilden somit im Schnitt gesehen vorzugsweise die Seiten eines Trapezes, bei dem der Einkoppelbereich 1 in der oberen bzw. kürzeren Seite des Trapezes ausgebildet ist. Wie Figur 4 erkennen lässt, unterscheiden sich die zweiten Reflexionsflächen 3 von den ersten Reflexionsflächen 2 dahingehend, dass die zweiten Reflexionsflächen 3 im Schnitt gesehen gebogen ausgebildet sind bzw. eine von außerhalb der Linse L gesehen konvexe Form haben. Auch die zweiten Reflexionsflächen 3 können, wie in Figur 4 dargestellt, symmetrisch ausgebildet sein. Wie insbesondere die Figuren 1 und 2 erkennen lassen, können sich die Reflexionsflächen 2, 3 auch dahingehend unterscheiden, dass sie unterschiedlich lang sind. Das heißt, die sich in eine erste Richtung, vorzugsweise in Breitenrichtung der Linse L erstreckenden ersten Reflexionsflächen 2 sind vorzugsweise kürzer als die sich in eine quer zur ersten Richtung erstreckenden zweiten Richtung, vorzugsweise in Längsrichtung der Linse L erstreckenden zweiten Reflexionsflächen 3. Mit anderen Worten kann dieser die Reflexionsflächen 2, 3 aufweisende Teil der Linse L in Draufsicht der Linse L gesehen eine langgestreckte Form aufweisen. Die ersten und zweiten Reflexionsflächen 2, 3 bilden somit wenigstens teilweise die Innenseite des Mantels der Linse L.

Wie insbesondere in Figur 1 erkennbar, erstrecken sich die Reflexionsflächen 2, 3, also die erste und die zweite Richtung, quer zueinander. In Draufsicht der Linse L gesehen bilden die erste und die zweite Richtung der Reflexionsfläche 2 bzw. 3 also vorzugsweise ein Viereck, besonders bevorzugt ein Rechteck. Die Reflexionsflächen 2, 3 laufen dann derart ineinander über, dass diese in Draufsicht der Linse L gesehen ein Viereck, besonders bevorzugt ein Rechteck mit abgerundeten bzw. abgeflachten Ecken bilden. In Draufsicht der Linse L gesehen ist der Einkoppelbereich 1 dann derart vorgesehen, dass der größere Radius R2 parallel zur Richtung der Erstreckung der ersten Reflexionsflächen 2 bzw. der ersten Richtung oder Längsrichtung der Linse L vorgesehen ist, und der kleinere Radius R1 parallel zur Richtung der Erstreckung der zweiten Reflexionsflächen 3 bzw. der zweiten Richtung oder Breitenrichtung der Linse L vorgesehen ist.

Die Linse L weist ferner einen Auskoppelbereich 4 zum Auskoppeln des in die Linse L über den Einkoppelbereich 1 eingekoppelten Lichts auf. Wie in Figur 3 dargestellt, wird ein erster Teil des in die Linse L eingekoppelten Lichts, vorzugsweise der über den Einkoppelbereich 1 insbesondere (nur) über das Sackloch 1b eingekoppelte Licht, an den ersten Reflexionsflächen 2 reflektiert und anschließend aus dem Auskoppelbereich 4 der Linse L als Lichtbündel 31, 32 ausgekoppelt. Der andere Teil des in die Linse L über den Einkoppelbereich 1, insbesondere das (nur) über die konvexe Form 1a eingekoppelte Licht, gelangt direkt, also ohne an den Reflexionsflächen 2, 3 zuvor reflektiert zu werden, zum Auskoppelbereich 4, um über diesen als Lichtbündel 32 die Linse L zu verlassen.

In Figur 4 ist erkennbar, dass der an den zweiten Reflexionsflächen 3 reflektierte Teil des über den Einkoppelbereich 1 seitlich, insbesondere über die Sacklochbohrung 1b eingekoppelten Lichts als Lichtbündel 41, 43 die Linse L verlässt. Die Reflexionsflächen 3 bewirken dabei insbesondere eine Reflexion, bei welcher die Lichtbündel 41, 43 in Richtung der optischen Achse der Linse L gebündelt werden. Die Lichtbündel 41, 43 können sich somit bereits im Auskoppelbereich 4 mit den von der konvexen Form 1a kommenden Teil des Lichts bzw. dem Lichtbündel 42 schneiden. Zusammen mit dem Lichtbündel 42 ergibt sich somit eine wie in Figur 4 schematisch dargestellte breite Lichtverteilung und starke Streuung des Lichts nach unterhalb der Linse L. Wie bei Vergleich der Figuren 3 und 4 erkennbar, sind also die Lichtbündel 31-33 vorzugsweise eher parallel als die Lichtbündel 41-43.

Je nach Schnitt durch die Linse L wird also Licht durch die Linse L bzw. ihre Reflexionsflächen 2, 3 unterschiedlich reflektiert. Wie in Figur 3 dargestellt, ist bei Schnitt der Linse L durch die ersten Reflexionsflächen 2 eine Auskopplung des Lichts aus der Linse L erkennbar, bei welcher an den Reflexionsflächen 2 reflektiertes Licht als Lichtstrahlen bzw. Lichtbündel 31, 33 nach unterhalb der Linse L im Vergleich zu der Reflexion mittels der Reflexionsflächen 3 aufgeweitet wird. Hierdurch wird eine im Vergleich zur Figur 4 dargestellten Lichtauskopplung homogenere Lichtauskopplung bewirkt.

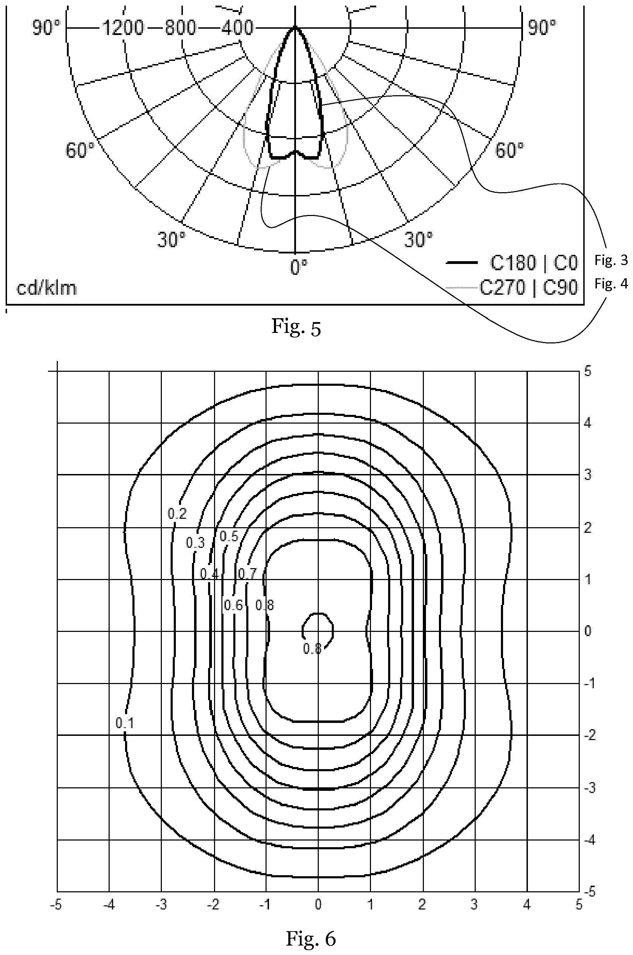

In den Figuren 5 und 6 sind die entsprechenden Lichtverteilungskurven bzw. Ausleuchtungen dargestellt. Wie in Figur 5 in Polarkoordinaten dargestellt, wird durch die Linse L somit eine Art doppelte Herzform bewirkt. Es ist erkennbar, dass die durch die in Figur 4 dargestellte, insbesondere durch die Reflexionsflächen 3 bewirkte Abstrahlung ein größeres Herz bewirkt, als die in Figur 3 dargestellte, insbesondere durch die Reflexionsflächen 2 bewirkte Abstrahlung. Wie in Figur 6 erkennbar, wird mittels der Linse L eine im Wesentlichen ovale, großflächige Lichtabstrahlung bewirkt.

Der Auskoppelbereich 4 ist dabei in Draufsicht gesehen vorzugsweise quadratisch ausgebildet, ist jedoch nicht auf eine bestimmte Form beschränkt. Der Auskoppelbereich 4 ist in Draufsicht gesehen vorzugsweise länger und breiter als der Einkoppelbereich 1. Vorzugsweise bilden die Reflexionsflächen 2, 3 mit dem Einkoppelbereich und dem Auskoppelbereich 4 eine kegelstumpfförmige Form. Die Erfindung ist dabei jedoch nicht auf eine solche Form beschränkt. Die Reflexionsflächen 2, 3 verbinden vorzugsweise den Einkoppelbereich 1 mit dem Auskoppelbereich 4.

Die Linse L kann außerdem, wie in den Figuren 3 und 4 dargestellt, dazu eingerichtet sein, ein Leuchtmittel 5 aufzunehmen. Beispielsweise kann der Einkoppelbereich 1 dazu ausgebildet sein, das Leuchtmittel 5 aufzunehmen, sodass das von dem Leuchtmittel 5 emittierte Licht, wie in den Figuren 3 und 4 beispielhaft dargestellt, in den Einkoppelbereich 1 und somit über diesen, vorzugsweise über die konvexe Form 1a und das Sackloch 1b, in die Linse L eingekoppelt werden kann. Das Leuchtmittel 5 muss jedoch nicht zwangsläufig im Einkoppelbereich 1 vorgesehen sein, solange das von dem Leuchtmittel 5 emittierte Licht in den Einkoppelbereich 1 gelangt. Das Leuchtmittel 5 ist vorzugsweise eine LED.

In den Figuren 7 bis 9 ist beispielhaft eine erfindungsgemäße Linsenanordnung 10 dargestellt. Die Linsenanordnung 10 weist dabei zwei der vorbeschriebenen Linsen L, also eine erste Linse L1 und eine zweite Linse L2, auf. Die Linsen L1, L2 sind dabei derart angeordnet, dass sich ihre Auskoppelbereiche 4 vorzugsweise parallel gegenüberliegen, also der Normalenvektor des einen Auskoppelbereichs 4 in die dem Normalenverktor des andere Auskoppelbereichs 4 entgegengesetzte Richtung zeigt. Das heißt, die flächige Seite der Auskoppelbereiche 4 sind vorzugsweise aufeinander zugerichtet. Außerdem sind die Linsen L1, L2 relativ zueinander bezüglich der Hauptabstrahlrichtung der Linsenanordnung verdreht angeordnet. Wie insbesondere in Figur 7 beispielhaft dargestellt, sind die Linsen L1, L2 bezüglich der Hauptabstrahlrichtung um 90 Grad relativ zueinander verdreht angeordnet. Somit erstrecken sich einerseits die ersten Reflexionsflächen 2 der ersten Linse L1 und die zweiten Reflexionsflächen 3 der zweiten Linse L2 und/oder andererseits die zweiten Reflexionsflächen 3 der ersten Linse L1 und die ersten Reflexionsflächen 2 der zweiten Linse L2 in dieselbe Richtung. Außerdem ist in den Figuren 7 bis 9 erkennbar, dass die optischen Achsen der Linsen L1, L2 fluchten, um somit eine bevorzugte Linsenanordnung 10 bereitzustellen, welche somit insbesondere in Breiten- und Längsrichtung der Linsenanordnung 10 kompakt ausgebildet ist.

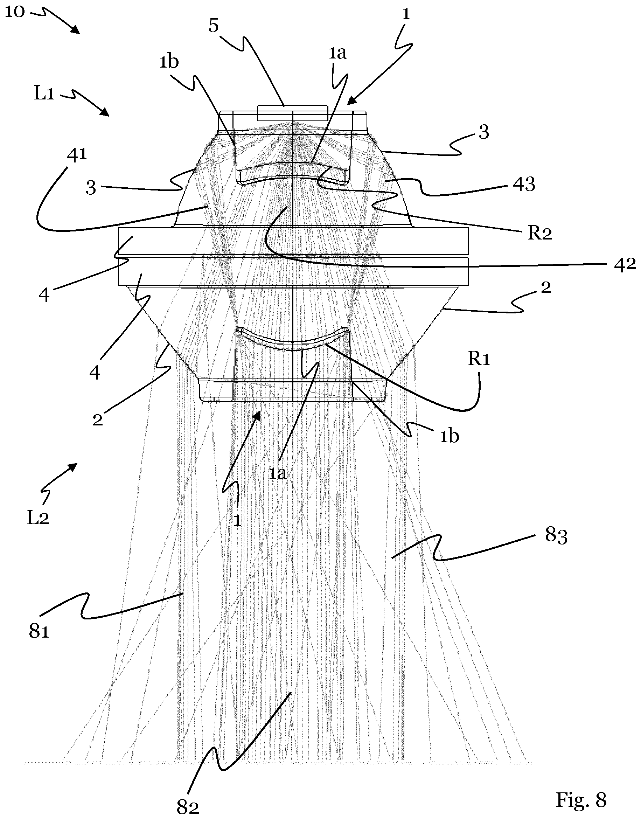

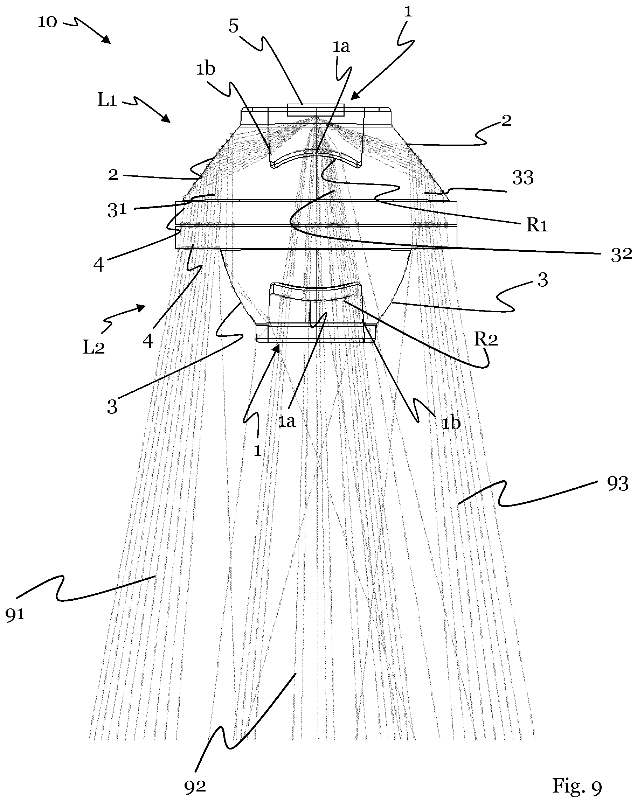

Die Linsen L1, L2 sind also derart angeordnet und zueinander relativ verdreht angeordnet, dass Licht, welches über den Einkoppelbereich 1 der ersten Linse L in diese eingekoppelt wird und aus der ersten Linse L1 über ihren Auskoppelbereich 4 ausgekoppelt wird, also die Lichtbündel 31-33 und 41-43, in die zweite Linse L2 über deren Auskoppelbereich 4 eingekoppelt wird. Die sich daraus ergebenden Strahlengänge 81-83 und 91-93 sind beispielhaft in den Figuren 8 und 9 dargestellt.

Figur 8 lässt erkennen, dass das aus dem Auskoppelbereich 4 der ersten Linse L1 ausgekoppelte Licht, also die Lichtbündel 41-43, in die zweite Linse L2 über deren Auskoppelbereich 4 eingekoppelt wird und in der zweiten Linse L2 unter anderem über deren Einkoppelbereich 1 und deren ersten Reflexionsflächen 2 gerichtet als Lichtbündel 81-83 ausgekoppelt wird. Hierdurch wird das Licht an den Reflexionsflächen 2 und dem Einkoppelbereich 1 der zweiten Linse L2 derart gebrochen, dass es gerichtet bzw. fokussiert wird. An den zweiten Reflexionsflächen 3 der ersten Linse L1 reflektiertes Licht, also die Lichtbündel 41, 43, wird in Richtung des Einkoppelbereichs 1, insbesondere deren konvexe Form 1a, der zweiten Linse L2 reflektiert. Folglich trifft dieses Licht dann auf den Einkoppelbereich 1 der zweiten Linse L2, um an diesem Einkoppelbereich 1 bzw. deren konvexen Form 1a gebrochen zu werden und sodann als Lichtbündel 82 die Linsenanordnung 10 zu verlassen. Es ist erkennbar, dass das an den zweiten Reflexionsflächen 3 reflektierte Licht sich im Wesentlichen an einem Randbereich der konvexen Form 1a schneidet, um somit an diesem Randbereich die gewünschte gerichtete Lichtabgabe zu bewirken.

In Figur 8 ist ferner erkennbar, dass durch die verdrehte Anordnung der Linsen L1, L2 zueinander nahezu keines an den zweiten Reflexionsflächen 3 der ersten Linsen L1 reflektiertes Licht auf die ersten Reflexionsflächen 2 der zweiten Linse L2 trifft, um über diese gerichtet ausgekoppelt zu werden. Das heißt, im Wesentlichen nur über die konvexe Form 1a der ersten Linse L1 in die erste Linse L1 eingekoppeltes Licht, also der Lichtbündel 42, gelangt zu den ersten Reflexionsflächen 2 der zweiten Linse L2, um über diese gerichtet als Lichtbündel 81, 82 aus der zweiten Linse L2 ausgekoppelt zu werden. Außerdem wird jenes Licht, was über die konvexe Form 1a der ersten Linse L1 in diese eingekoppelt wird und nicht über die ersten Reflexionsflächen 2 der zweiten Linse L2 gerichtet wird, fast ausschließlich über den Einkoppelbereich 1, insbesondere über dessen konvexe Form 1a, gerichtet ausgekoppelt. Jenes Licht, welches über die konvexe Form 1a des Einkoppelbereichs 1 der ersten Linse L1 in diese eingekoppelt wird und sodann in die zweite Linse L2 eingekoppelt wird und nicht mittels deren ersten Reflexionsflächen 2 oder deren Einkoppelbereich 1 gerichtet ausgekoppelt wird, verlässt die zweite Linse L2 zwischen den ersten Reflexionsflächen 2 und dem Einkoppelbereich 1.

Figur 9 zeigt die Linsenanordnung 10 in einen weiteren, zum Schnitt gemäß Figur 8 vorzugsweise um 90 Grad verdrehten Schnitt. Das heißt, Figur 9 zeigt einen Schnitt der Linsenanordnung 10 mit Blick in Breitenrichtung der ersten Linse L1 bzw. in Richtung der Erstreckung der ersten Reflexionsflächen 2 der ersten Linse L1. In Figur 9 ist erkennbar, dass Licht, welches an den ersten Reflexionsflächen 2 der ersten Linse L1 reflektiert wird, in die zweite Linse L2 über deren Auskoppelbereich 1 als Lichtbündel 31, 33 eingekoppelt wird und aus der zweiten Linse L2 im Wesentlichen unverändert, das heißt insbesondere bezüglich der Lichtlenkung unverändert, als Lichtbündel 91, 93 ausgekoppelt wird. Dies wird gemäß diesem Ausführungsbeispiel derart bewirkt, dass das an den ersten Reflexionsflächen 2 der ersten Linse L1 reflektierte Licht aus der ersten Linse L1 ausgekoppelt wird und anschließend in die zweite Linse L2 eingekoppelt wird, dort jedoch im Wesentlichen nur den Auskoppelbereich 4 der zweiten Linse L2 durchläuft. Das an der ersten Reflexionsfläche 2 der ersten Linse L1 reflektierte Licht wird also aus der zweiten Linse L2 wenigstens teilweise, insbesondere im Wesentlichen ausschließlich neben den zweiten Reflexionsflächen 3 der zweiten Linse L2 ausgekoppelt, um somit aus der zweiten Linse L2 im Wesentlichen unverändert ausgekoppelt zu werden. Hierfür kann beispielsweise vorgesehen sein, dass die ersten Reflexionsflächen 2 der zweiten Linse L2 kürzer ausgebildet sind als die zweiten Reflexionsflächen 3 der ersten Linse L1, sodass das an den ersten Reflexionsflächen 2 der ersten Linse L1 reflektierte und sodann in die zweite Linse L2 eingekoppelte Licht aus der zweiten Linse L2 im Wesentlichen ausschließlich neben den zweiten Reflexionsflächen 3 der zweiten Linse L2 ausgekoppelt wird.

In Figur 9 ist ferner erkennbar, dass jenes Licht, welches nicht an den ersten Reflexionsflächen 2 der ersten Linse L1 reflektiert wird, über die konvexe Form 1a des Einkoppelbereichs 1 der ersten Linse L1 in die erste Linse L1 eingekoppelt wird und aus dieser als Lichtbündel 32 ausgekoppelt und sodann in die zweite Linse L2 eingekoppelt wird. Dort trifft dann dieser Anteil des Lichts bzw. der Lichtbündel 32 wenigstens auf die konvexe Form 1a und wird über diese im Wesentlichen unverändert aus der zweiten Linse L2 als Lichtbündel 92 ausgekoppelt. Im Ergebnis wird somit in diesem Schnitt der Linsenanordnung 10 das von der ersten Linse L1 ausgekoppelte und in die zweite Linse L2 eingekoppelte Licht durch die zweite Linse L2 im Wesentlichen nicht gerichtet, bzw. durchläuft diese ohne wesentliche Richtungsänderung.

Gemäß dem in den Figuren 8 und 9 gezeigten Ausführungsbeispiel liegen die Einkoppelbereiche 1 der Linsen L1, L2, vorzugsweise deren konvexe Form 1a, sich diametral gegenüber, um somit Licht mittels der Lichtanordnung 10 besonders vorteilhaft zu richten bzw. zu fokussieren.

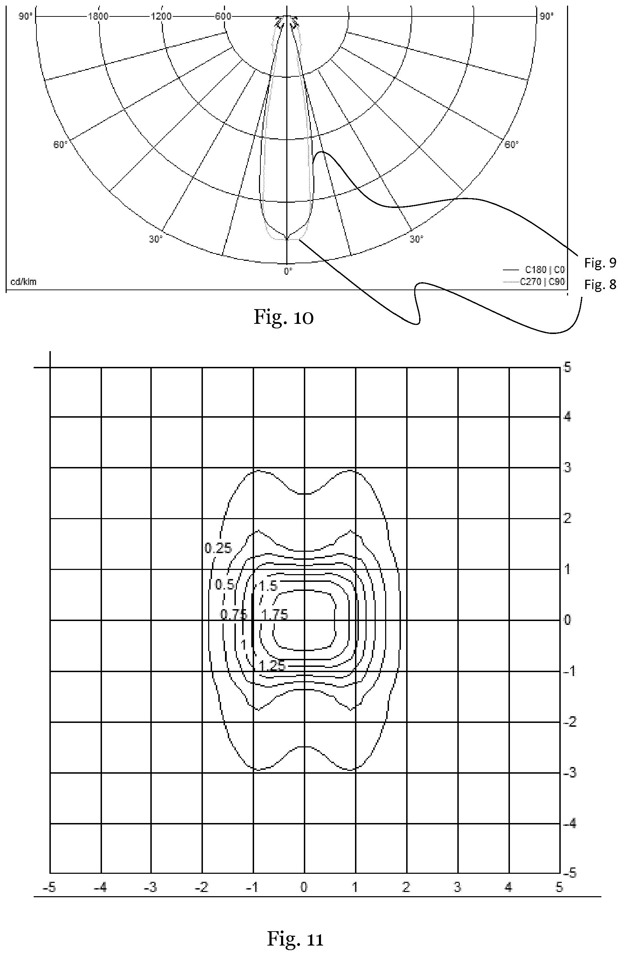

Die Verdrehung der Linsen L1, L2 zueinander bewirkt also, dass Licht in einem ersten Querschnitt, wie beispielsweise der in Figur 8 dargestellte, mittels der zweiten Linse L2 gerichtet wird und dass in einer zweiten Schnittansicht, wie beispielsweise die in Figur 9 gezeigte, mittels der zweiten Linse L2 im Wesentlichen nicht gerichtet wird. Die entsprechende Lichtstärkeverteilung ist in Figur 10 dargestellt. Dort ist in Polarkoordinaten dargestellt, wie die Lichtstärkeverteilung je nach Schnitt, also nach Figur 8 und Figur 9 verläuft. Im Vergleich zu der Lichtstärkeverteilung einer einzelnen Linse L (Figur 5) ergibt sich somit bei der Linsenanordnung 10 eine Lichtstärkeverteilung, bei der- wie in den Figuren 8 und 9 dargestellt - die Lichtstärkeverteilungen der jeweiligen Schnitte der Linsenanordnung 10 näher zusammen sind. In Figur 11 ist die entsprechende Ausleuchtung der Beleuchtungsfläche der Linsenanordnung 10 dargestellt. Das Licht bzw. dessen Verteilung wird somit bezüglich aller Richtungen besser fokussiert bzw. verengt oder gebündelt.

Die in den Figuren beispielhaft dargestellte Linsenanordnung 10 ist dazu eingerichtet, das über den Einkoppelbereich 1 der ersten Linse L1 eingekoppelte Licht derart gerichtet aus der zweiten Linse L2 auszukoppeln, dass es fokussiert wird. Erfindungsgemäß kann die Linsenanordnung 10 jedoch auch derart eingerichtet sein, Licht derart zu richten und aus der zweiten Linse L2 auszukoppeln, dass es nicht fokussiert wird, sondern beispielsweise aufgeweitet und/oder gestreut wird.

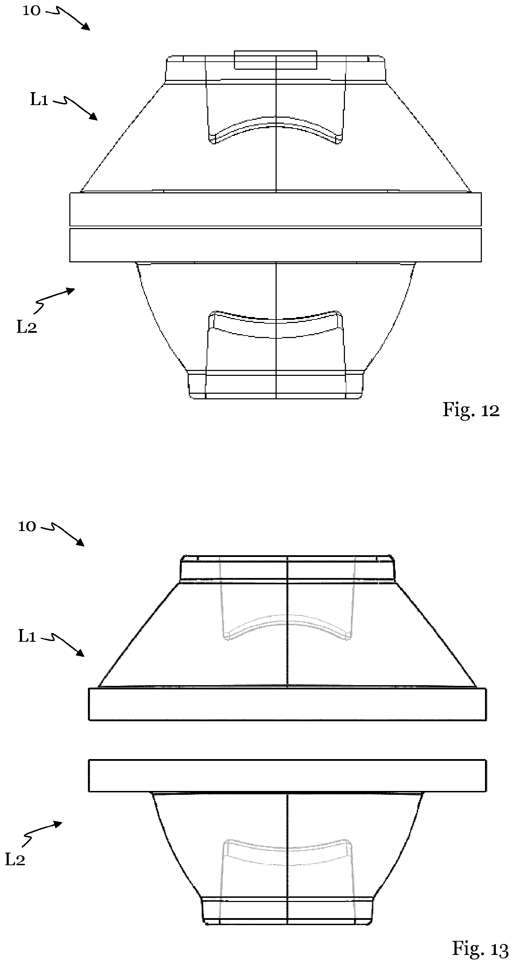

Wie in den Figuren 12 und 13 dargestellt, können die Auskoppelbereiche 4 der Linsen L1, L2 miteinander in Kontakt, insbesondere in flächigem Kontakt stehen oder voneinander beabstandet sein. Der in Figur 13 dargestellte Abstand zwischen den Linsen L1 und L2 kann entweder fest vorgegeben oder variable einstellbar sein. In letzterem Fall ist die Linsenanordnung 10 dann eingerichtet, den Abstand zwischen den Auskoppelbereichen 4 der Linsen L1, L2 einzustellen, beispielsweise indem wenigstens eine, vorzugsweise beide der Linsen L1, L2 beweglich zu der jeweils anderen Linse ist. Hierfür können beispielsweise geeignete Mittel bzw. ein Verstellmechanismus vorgesehen sein, um den Abstand einzustellen, sodass das über die erste Linse L1 abgegebene Licht durch die zweite Linse L2 wie gewünscht gerichtet, insbesondere fokussiert wird. Das heißt, je geringer der Abstand zwischen den Linsen L1, L2 dann ist, desto stärker wird gerichtet bzw. fokussiert.

In der hier beispielhaft beschriebenen Ausführung der Anordnung 10 sind, wie in den Figuren gezeigt, die Linsen L1, L2 identisch ausgestaltet. Hierdurch wird der Herstellungsaufwand der Linsenanordnung in besonderem Maße reduziert, da die oben erwähnte Linse L in zweifacher Stückzahl mit nur einem Werkzeug bzw. einer Maschine hergestellt werden muss.

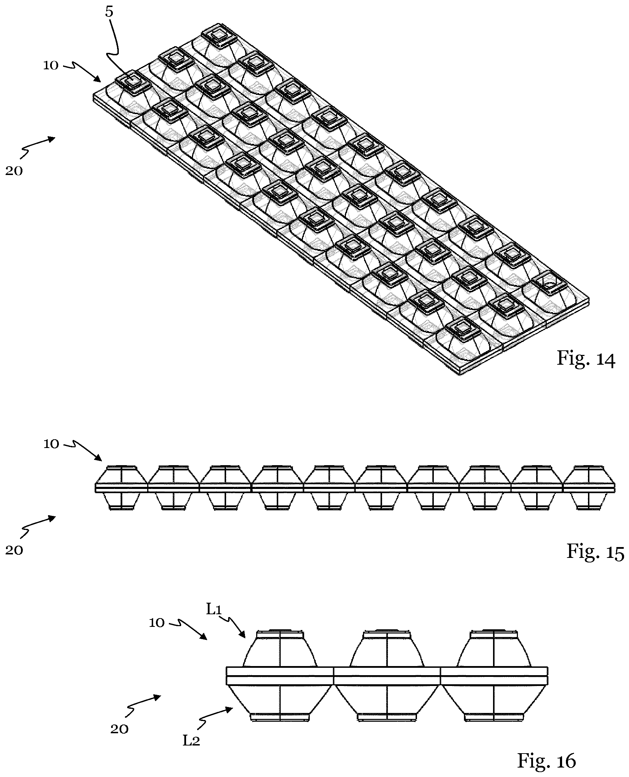

In den Figuren 14 bis 16 ist eine bevorzugte Anwendung der Linsenanordnung 10 dargestellt. Die Linsenanordnung 10 wird dabei in einer Vielzahl vorgesehen und nebeneinander angeordnet, um somit ein Linsenarray 20 zu bilden. Die Linsenanordnungen 10 bilden dabei vorzugsweise ein rasterförmiges Linsenarray 20, beispielsweise indem die Stirnseiten der Auskoppelbereiche 4 benachbarter Linsenanordnungen 10 aneinanderstoßen (vgl. Figuren 15 und 16). Benachbarte erste Linsen L1 und/oder benachbarte Linsen L2 können dabei integral miteinander verbunden bzw. ausgebildet sein. Vorzugsweise sind wenigstens zwei, mehrere oder alle ersten Linsen L1 und/oder wenigstens zwei, mehrere oder alle zweiten Linsen L2 jeweils integral miteinander ausgebildet sein. Ferner können mehrere solcher Linsenarrays 20 verwendet werden, um diese so anzuordnen, dass die Lichtauskopplung des einen Linsenarrays 20 der Lichteinkopplung eines benachbarten Linsenarrays 20 gegenüberliegt. Somit kann durch die Vielzahl an Linsenarrays 20 ein (weiteres) Richten bzw. Fokussieren von Licht erfolgen.

Eine weitere bevorzugte Anwendung der Linsenanordnung 10 bzw. des Linsenarrays 20 ist die Anwendung dieser in einer Leuchte. Hierfür weist die jeweilige Linsenanordnung 10 dann ein Leuchtmittel 5 wie beispielsweise eine LED für die jeweilige Linsenanordnung 10 auf.

Die Erfindung ist dabei nicht auf die dargestellten Ausführungsbeispiele beschränkt. Alle vorstehend beschriebenen Merkmale oder in den Figuren gezeigten Merkmale sind im Rahmen der Erfindung beliebig vorteilhaft miteinander kombinierbar.

## Patentansprüche

1. Linsenanordnung (10) zum Richten des von einem Leuchtmittel (5) emittierten Lichts, aufweisend eine erste und eine zweite Linse (L1, L2) zur totalen internen Reflexion von Licht, wobei die Linsen (L1, L2) jeweils aufweisen:
• einen Einkoppelbereich (1) zum Einkoppeln von Licht in die Linse (L1; L2),
• erste und zweite Reflexionsflächen (2, 3) zur internen Reflexion wenigstens eines Teils des über den Einkoppelbereich (1) eingekoppelten Lichts, wobei sich die ersten Reflexionsflächen (2) von den zweiten Reflexionsflächen (3) unterscheiden, und
• einen Auskoppelbereich (4) zum Auskoppeln des in die Linse (L1; L2) über den Einkoppelbereich (1) eingekoppelten Lichts,
wobei die Linsen (L1, L2) derart angeordnet sind, dass sich ihre Auskoppelbereiche (4) gegenüberliegen und die Linsen (L1, L2) derart relativ zueinander bezüglich einer Hauptabstrahlrichtung verdreht angeordnet sind, dass Licht, welches über den Einkoppelbereich (1) der ersten Linse (L1) in diese eingekoppelt wird und aus der ersten Linse (L1) über ihren Auskoppelbereich (4) ausgekoppelt wird, in die zweite Linse (L2) über deren Auskoppelbereich (4) eingekoppelt und wenigstens teilweise aus deren Einkoppelbereich (1) und wenigstens einer der ersten und zweiten Reflexionsflächen (2, 3) der zweiten Linse (L2) gerichtet ausgekoppelt wird.

2. Linsenanordnung (10) nach Anspruch 1, wobei die Linsenanordnung (10) eingerichtet ist, über den Einkoppelbereich (1) der ersten Linse (L1) eingekoppeltes Licht derart gerichtet aus der zweiten Linse (L2) auszukoppeln, dass es fokussiert wird.

3. Linsenanordnung (10) nach Anspruch 1 oder 2, wobei die Linsen (L1, L2) bezüglich der Hauptabstrahlrichtung um 90° relativ zueinander verdreht angeordnet sind, und/oder
wobei die Linsen (L1, L2) derart angeordnet sind, dass ihre optischen Achsen fluchten.

4. Linsenanordnung (10) nach einem der vorhergehenden Ansprüche, wobei die Linsen (L1, L2) derart relativ zueinander verdreht angeordnet sind, dass ein Teil des von der ersten Linse (L1) ausgekoppelten Lichts teilweise auf die ersten Reflexionsflächen (2) der zweiten Linse (L2) trifft, um über diese gerichtet ausgekoppelt zu werden.

5. Linsenanordnung (10) nach einem der vorhergehenden Ansprüche, wobei die Linsen (L1, L2) derart relativ zueinander verdreht angeordnet sind, dass wenigstens das an den zweiten Reflexionsflächen (3) der ersten Linse (L1) reflektierte Licht auf den Einkoppelbereich (1) der zweiten Linse (L2) trifft, um an diesem gerichtet ausgekoppelt zu werden.

6. Linsenanordnung (10) nach einem der vorhergehenden Ansprüche, wobei in Draufsicht der zweiten Linse (L2) und entgegen der Hauptabstrahlrichtung gesehen der Einkoppelbereich (1) der zweiten Linse (L2) eine konvexe Form (1a) aufweist, und wobei die Linsen (L1, L2) derart relativ zueinander verdreht angeordnet sind, dass das an den zweiten Reflexionsflächen (3) der ersten Linse (L1) reflektierte Licht auf diese konvexe Form (1a) trifft, um über diese gerichtet ausgekoppelt zu werden.

7. Linsenanordnung (10) nach einem der vorhergehenden Ansprüche, wobei in Draufsicht der ersten Linse (L1) und in Hauptabstrahlrichtung gesehen der Einkoppelbereich (1) der ersten Linse eine konvexe Form (1a) aufweist, um auf diese konvexe Form (1a) treffendes Licht in die erste Linse (L1) einzukoppeln, und wobei die Linsen (L1, L2) derart relativ zueinander verdreht angeordnet sind, dass dieses Licht von der ersten Linse (L1) ausgekoppelt wird und wenigstens teilweise auf die ersten Reflexionsflächen (2) und/oder den Einkoppelbereich (1) der zweiten Linse (L2) trifft, um über diese gerichtet ausgekoppelt zu werden.

8. Linsenanordnung (10) nach Anspruch 6 oder 7, wobei die jeweilige konvexe Form (1a) in Richtung der Erstreckung der jeweiligen ersten Reflexionsflächen (2) gesehen einen ersten Radius (R1) und in Richtung der Erstreckung der jeweiligen zweiten Reflexionsflächen (3) gesehen einen zweiten Radius (R2) hat, wobei der erste Radius (R1) bevorzugt kleiner ist als der zweite Radius (R2).

9. Linsenanordnung (10) nach einem der vorhergehenden Ansprüche, wobei die Linsen (L1, L2) derart relativ zueinander verdreht angeordnet sind, dass Licht, welches an den ersten Reflexionsflächen (2) der ersten Linse (L1) reflektiert wird, in die zweite Linse (L2) über den Auskoppelbereich (4) der zweiten Linse (L2) eingekoppelt wird und aus der zweiten Linse (L2) im Wesentlichen unverändert ausgekoppelt wird.

10. Linsenanordnung (10) nach einem der vorhergehenden Ansprüche, wobei die Linsen (L1, L2) derart relativ zueinander verdreht angeordnet sind, dass Licht, welches an den ersten Reflexionsfläche (2) der ersten Linse (L1) reflektiert wird, aus der zweiten Linse (L2) wenigstens teilweise neben den zweiten Reflexionsflächen (3) der zweiten Linse (L2) ausgekoppelt wird, um somit aus der zweiten Linse (L2) im Wesentlichen unverändert ausgekoppelt zu werden.

11. Linsenanordnung (10) nach einem der vorhergehenden Ansprüche, wobei die Auskoppelbereiche (4, 4) miteinander in Kontakt stehen oder voneinander beabstandet sind.

12. Linsenanordnung (10) nach einem der vorhergehenden Ansprüche, ferner eingerichtet, um den Abstand zwischen den Auskoppelbereichen (4, 4) einzustellen.

13. Linsenanordnung (10) nach einem der vorhergehenden Ansprüche, wobei die ersten Reflexionsflächen (2) in seitlicher Schnittansicht gesehen gerade ausgebildet sind und/oder symmetrisch bezüglich der Hauptabstrahlrichtung ausgebildet sind, und/oder
wobei die zweiten Reflexionsflächen (3) in seitlicher Schnittansicht gesehen gebogen ausgebildet sind und/oder symmetrisch bezüglich der Hauptabstrahlrichtung ausgebildet sind, und/oder
wobei die Linsen (L1, L2) identisch sind.

14. Linsenarray (20) aufweisend eine Vielzahl von nebeneinander angeordneten Linsenanordnungen (10) nach einem der vorhergehenden Ansprüche, wobei bevorzugt wenigstens zwei, mehrere oder alle ersten Linsen (L1) und/oder wenigstens zwei, mehrere oder alle zweiten Linsen (L2) jeweils integral miteinander ausgebildet sind.

15. Leuchte aufweisend eine Linsenanordnung (10) nach einem der Ansprüche 1 bis 13 oder ein Linsenarray (20) nach Anspruch 14 und ein Leuchtmittel (5), vorzugsweise eine LED, für die jeweilige Linsenanordnung (10).

## Claims

1. A lens assembly (10) for directing the light emitted by a light source (5), having a first and a second lens (L₁, L₂) for the total internal reflection of light, wherein the lenses (L₁, L₂) in each case have:
• a coupling region (1) for the coupling of light into the lens (L₁; L₂),
• first and second reflection surfaces (2, 3) for the internal reflection at least of a part of the light coupled via the coupling region (1), wherein the first reflection surfaces (2) differ from the second reflection surfaces (3), and
• a decoupling region (4) for the decoupling of the light coupled into the lens (L₁; L₂) via the coupling region (1),
wherein the lenses (L₁, L₂) are arranged in such a manner that their decoupling regions 4) lie opposite one another and the lenses (L₁, L₂) are arranged rotated relative to one another with respect to a main emission direction in such a manner that light, which is coupled via the coupling region (1) of the first lens (L₁) into the latter and is decoupled from the first lens (L₁) via its decoupling region (4), is coupled into the second lens (L₂) via its decoupling region (4) and is decoupled in a directed manner at least partially from its coupling region (1) and at least one of the first and second reflection surfaces (2, 3) of the second lens (L₂).

2. The lens assembly (10) according to Claim 1, wherein the lens assembly (10) is configured to decouple coupled light via the coupling region (1) of the first lens (L₁) in a directed manner from the second lens (L₂), in such a manner that it is focused.

3. The lens assembly (10) according to Claim 1 or 2, wherein the lenses (L₁, L₂) are arranged with respect to the main emission direction rotated by 90°relative to one another, and/or
wherein the lenses (L₁, L₂) are arranged in such a manner that their optical axes are aligned.

4. The lens assembly (10) according to any one of the preceding claims, wherein the lenses (L₁, L₂) are arranged rotated relative to one another in such a manner that a part of the light decoupled from the first lens (L₁) partially strikes the first reflection surfaces (2) of the second lens (L₂), in order to be decoupled in a directed manner via the latter.

5. The lens assembly (10) according to any one of the preceding claims, wherein the lenses (L₁, L₂) are arranged rotated relative to one another in such a manner that at least the light reflected on the second reflection surfaces (3) of the first lens (L₁) strikes the coupling region (1) of the second lens (L₂), in order to be decoupled in a directed manner from the latter.

6. The lens assembly (10) according to any one of the preceding claims, wherein in the top view of the second lens (L₂) and viewed counter to the main emission direction the coupling region (1) of the second lens (L₂) has a convex form (1a), and wherein the senses (L₁, L₂) are arranged rotated relative to one another in such a manner that the light reflected on the second reflection surfaces (3) of the first lens (L₁) strikes said convex form (1a), in order to be decoupled in a directed manner via the latter.

7. The lens assembly (10) according to any one of the preceding claims, wherein in the top view of the first lens (L₁) and viewed in the main emission direction the coupling region (1) of the first lens has a convex form (1a), in order to couple light striking this convex form (1a) into the first lens (L₁), and wherein the lenses (L₁, L₂) are arranged rotated relative to one another in such a manner that said light is decoupled from the first lens (L₁) and at least partially strikes the first reflection surfaces (2) and/or the coupling region (1) of the second lens (L₂), in order to be decoupled in a directed manner via the latter.

8. The lens assembly (10) according to Claim 6 or 7, wherein the respective convex form (1a) viewed in the direction of the extension of the respective first reflection surfaces (2) has a first radius (R₁) and viewed in the direction of the extension of the respective second reflection surfaces (3) has a second radius (R₂), wherein the first radius (R₁) is preferably smaller than the second radius (R₂).

9. The lens assembly (10) according to any one of the preceding claims, wherein the lenses (L₁, L₂) are arranged rotated relative to one another in such a manner that light, which is reflected on the first reflection surfaces (2) of the first lens (L₁), is coupled into the second lens (L₂) via the decoupling region (4) of the second lens (L₂) and is decoupled from the second lens (L₂) substantially unchanged.

10. The lens assembly (10) according to any one of the preceding claims, wherein the lenses (L₁, L₂) are arranged rotated relative to one another in such a manner that light, which is reflected on the first reflection surfaces (2) of the first lens (L₁), is decoupled from the second lens (L₂) at least partially next to the second reflection surfaces (3) of the second lens (L₂), in order thus to be decoupled from the second lens (L₂) substantially unchanged.

11. The lens assembly (10) according to any one of the preceding claims, wherein the decoupling regions (4, 4) are in contact with one another or are spaced apart from one another.

12. The lens assembly (10) according to any one of the preceding claims, furthermore configured, in order to set the distance between the decoupling regions (4, 4).

13. The lens assembly (10) according to any one of the preceding claims, wherein the first reflection surfaces (2) viewed in a lateral sectional view are designed so as to be straight and/or are designed so as to be symmetrical with respect to the main emission direction, and/or
wherein the second reflection surfaces (3) viewed in a lateral sectional view are designed so as to be curved and/or are designed so as to be symmetrical with respect to the main emission direction, and/or
wherein the lenses (L₁, L₂) are identical.

14. A lens array (20) having a plurality of lens assemblies (10) arranged adjacent to one another according to any one of the preceding claims, wherein preferably at least two, a plurality or all of the first lenses (L₁) and/or at least two, a plurality or all of the second lenses (L₂) are in each case integrally formed with one another.

15. A luminaire having a lens assembly (10) according to any one of Claims 1 to 13 or a lens array (20) according to Claim 14 and a lighting means (5), preferably an LED, for the respective lens assembly (10).

## Revendications

1. Configuration de lentilles (10) pour l'orientation de la lumière émise par un moyen d'éclairage (5), comprenant une première et une deuxième lentilles (L1, L2) pour la réflexion interne totale de la lumière, dans laquelle les lentilles (L1, L2) comprennent chacune :
• une partie d'entrée (1) pour l'entrée de lumière dans la lentille (L1 ; L2),
• des première et deuxième surfaces de réflexion (2, 3) pour la réflexion interne d'au moins une partie de la lumière entrée par l'intermédiaire de la partie d'entrée (1), dans lequel les premières surfaces de réflexion (2) sont différentes des deuxièmes surfaces de réflexion (3) et
• une partie de sortie (4) pour la sortie de la lumière entrée dans la lentille (L1 ; L2) par l'intermédiaire de la partie d'entrée (1),
dans laquelle les lentilles (L1, L2) sont disposées de façon à ce que leurs parties de sortie (4) soient en face l'une de l'autre et à ce que les lentilles (L1, L2) soient disposées de manière tournée entre elles par rapport à une direction d'émission principale, de façon à ce que la lumière qui est entrée par l'intermédiaire de la partie d'entrée (1) de la première lentille (L1) dans celle-ci et qui est sortie de la première lentille (L1) par l'intermédiaire de sa partie de sortie (4), est entrée dans la deuxième lentille (L2) par l'intermédiaire de sa partie de sortie (4) et est sortie de manière au moins partiellement orientée de sa partie d'entrée (1) et au moins d'une des première et deuxième surfaces de réflexion (2, 3) de la deuxième lentille (L2).

2. Configuration de lentilles (10) selon la revendication 1, dans laquelle la configuration de lentilles (10) est conçue pour sortir la lumière entrée par l'intermédiaire de la partie d'entrée (1) de la première lentille (L1) de manière orientée hors de la deuxième lentille (L2) de façon à ce qu'elle soit focalisée.

3. Configuration de lentilles (10) selon la revendication 1 ou 2, dans laquelle les lentilles (L1, L2) sont disposées de manière tournée entre elles de 90° par rapport à la direction d'émission principale et/ou
dans laquelle les lentilles (L1, L2) sont disposées de façon à ce que leurs axes optiques soient alignés.

4. Configuration de lentilles (10) selon l'une des revendications précédentes, dans laquelle les lentilles (L1, L2) sont disposées de manière tournée entre elles, de façon à ce qu'une partie de la lumière sortie de la première lentille (L1) arrive partiellement sur la première surface de réflexion (2) de la deuxième lentille (L2), afin d'être sortie de manière orientée par l'intermédiaire de celle-ci.

5. Configuration de lentilles (10) selon l'une des revendications précédentes, dans laquelle les lentilles (L1, L2) sont disposées de manière tournée entre elles, de façon à ce qu'au moins la lumière réfléchie au niveau des deuxièmes surfaces de réflexion (3) de la première lentille (L1) arrive sur la partie d'entrée (1) de la deuxième lentille (L2) afin d'être sortie de manière orientée au niveau de celle-ci.

6. Configuration de lentilles (10) selon l'une des revendications précédentes, dans laquelle, en vue de dessus de la deuxième lentille (L2) et vue à l'opposé de la direction d'émission principale, la partie d'entrée (1) de la deuxième lentille (L2) présente une forme convexe (1a) et dans laquelle les lentilles (L1, L2) sont disposées de manière tournée entre elles de façon à ce que la lumière réfléchie au niveau des deuxièmes surfaces de réflexion (3) de la première lentille (L1) arrive sur cette forme convexe (1a), afin d'être sortie de manière orientée par l'intermédiaire de celle-ci.

7. Configuration de lentilles (10) selon l'une des revendications précédentes, dans laquelle, en vue de dessus de la première lentille (L1) et vue dans la direction d'émission principale, la partie d'entrée (1) de la première lentille présente une forme convexe (1a) afin de faire entrer la lumière arrivant sur cette forme convexe (1a) dans la première lentille (L1) et dans laquelle les lentilles (L1, L2) sont disposées de manière tournée entre elles de façon à ce que cette lumière soit sortie de la première lentille (L1) et arrive au moins partiellement sur les premières surfaces de réflexion (2) et/ou la partie d'entrée (1) de la deuxième lentille (L2) afin d'être sortie de manière orientée par l'intermédiaire de celle-ci.

8. Configuration de lentilles (10) selon la revendication 6 ou 7, dans laquelle la forme convexe (1a) correspondante présente, vue dans la direction de l'extension des premières surfaces de réflexion (2) correspondantes, un premier rayon (R1) et, vue dans la direction de l'extension des deuxièmes surfaces de réflexion (3) correspondantes, un deuxième rayon (R2), dans laquelle le premier rayon (R1) est de préférence inférieur au deuxième rayon (R2).

9. Configuration de lentilles (10) selon l'une des revendications précédentes, dans laquelle les lentilles (L1, L2) sont disposées de manière tournée entre elles de façon à ce que la lumière qui est réfléchie au niveau des premières surfaces de réflexion (2) de la première lentille (L1), est entrée dans la deuxième lentille (L2) par l'intermédiaire de la partie de sortie (4) de la deuxième lentille (L2) et est sortie de la deuxième lentille (L2) de manière globalement inchangée.

10. Configuration de lentilles (10) selon l'une des revendications précédentes, dans laquelle les lentilles (L1, L2) sont disposées de manière tournée entre elles de façon à ce que la lumière qui est réfléchie au niveau des premières surfaces de réflexion (2) de la première lentille (L1), est sortie de la deuxième lentille (L2) au moins partiellement à proximité des deuxièmes surfaces de réflexion (3) de la deuxième lentille (L2) afin d'être sortie de manière globalement inchangée de la deuxième lentille (L2).

11. Configuration de lentilles (10) selon l'une des revendications précédentes, dans laquelle les parties de sortie (4, 4) sont en contact entre elles ou sont distantes entre elles.

12. Configuration de lentilles (10) selon l'une des revendications précédentes, conçue en outre pour régler la distance entre les parties de sortie (4, 4).

13. Configuration de lentilles (10) selon l'une des revendications précédentes, dans laquelle les premières surfaces de réflexion (2) sont réalisées de manière droite vues en coupe latérale et/ou sont réalisées de manière symétrique par rapport à la direction d'émission principale et/ou
dans laquelle les deuxièmes surfaces de réflexion (3) sont réalisées de manière courbée vues dans en coupe latérale et/ou sont réalisées de manière symétrique par rapport à la direction d'émission principale et/ou
les lentilles (L1, L2) sont identiques.

14. Matrice de lentilles (20) comprenant une pluralité de configurations de lentilles (10) juxtaposées selon l'une des revendications précédentes, dans laquelle de préférence au moins deux, plusieurs ou toutes les premières lentilles (L1) et/ou au moins deux, plusieurs ou toutes les deuxièmes lentilles (L2) sont réalisées d'une seule pièce.

15. Luminaire comprenant une configuration de lentilles (10) selon l'une des revendications 1 à 13 ou une matrice de lentilles (20) selon la revendication 14 et moyen d'éclairage (5), de préférence une LED, pour la configuration de lentilles (10) correspondante.
